# EUROPEAN PATENT APPLICATION

(11) **EP 4 838 648 A1**
(43) Date of publication of application: **11.11.2026**
(21) Application number: 26175751.2
(22) Date of filing: 30.04.2026
(51) Int. Cl.: H01M 50/15, H01M 10/04, H01M 50/103, H01M 50/176, H01M 50/184, H01M 50/188, H01M 50/553, H01M 50/564

(54) **LID ASSEMBLY AND ASSEMBLY METHOD THEREOF AND CELL**

(30) Priority: 09.05.2025 CN 202510596516; 29.08.2025 CN 202511236257
(71) Applicant: AESC Japan Ltd., Yokohama-shi, Kanagawa 220-0012 (JP)
(72) Inventor: LU, Jingjia, Jiangyin CIty, Wuxi City (CN)
(74) Representative: Becker, Eberhard

(57) **Abstract**

A lid assembly, an assembly method thereof, and a cell are disclosed. The lid assembly includes: a lid, a terminal, and an insulating and sealing structure. The lid and the terminal are connected through the insulating and sealing structure. The lid includes a lid base and a second fixing portion. The lid base includes a first surface and a second surface. The second fixing portion extends from the second surface at least along a second direction toward a centerline of the terminal. Along a first direction, the terminal is at least partially disposed on a side of the second fixing portion close to the first surface, and the insulating and sealing structure includes a sealing portion. Along the first direction, the second fixing portion and the terminal clamp the sealing portion to make the sealing portion in a compressed state, and the second fixing portion includes a third surface.

## Description

### BACKGROUND

### Technical Field

The present disclosure relates to the field of battery technology, and particularly relates to a lid assembly and an assembly method thereof and a cell.

### Related Art

In the development of battery technology, in addition to improving the performance of cells, safety considerations are likewise matters that cannot be disregarded. If the safety of the cells cannot be ensured, the cells cannot be put into use. Accordingly, enhancing the safety performance of the cells constitutes an urgent technical problem in the field of battery technology that remains to be resolved.

### SUMMARY

### Technical problem

In view of the foregoing, the purpose of the present disclosure is to propose a lid assembly and an assembly method thereof and a cell to at least partially solve the problem of how to enhance the safety performance of cells.

### Solution to Problem

Based on the above purpose, the first aspect of the present disclosure provides a lid assembly, including: a lid, a terminal and an insulating and sealing structure. The lid and the terminal are connected through the insulating and sealing structure. The lid includes a lid base and a second fixing portion disposed surrounding the terminal. The lid base includes a first surface and a second surface disposed opposite to each other along a first direction. The second fixing portion extends from the second surface at least along a second direction toward a centerline of the terminal. Along the first direction, the terminal is at least partially disposed on a side of the second fixing portion close to the first surface, and the insulating and sealing structure includes a sealing portion disposed between the second fixing portion and the terminal. The second fixing portion and the terminal clamp the sealing portion along the first direction, so that the sealing portion is in a compressed state. The first direction is a centerline direction of the terminal, the second direction is perpendicular to the first direction, wherein, along the first direction, the second fixing portion includes a third surface away from the first surface. The terminal includes a first end surface close to the second fixing portion. The first end surface protrudes beyond the third surface in a direction away from the first surface. A transition portion is disposed between the first end surface and a circumferential sidewall of the terminal. Along the first direction, a linear distance between the first end surface and the third surface is H₁, a dimension of the transition portion is H₂, a compression deformation amount of the sealing portion is B-b, a dimension of the sealing portion in a natural state is B, and a dimension of the sealing portion in a compressed state is b, where ${H}_{1} > B - b + {H}_{2} .$

Optionally, a projection of a portion of the terminal protruding beyond the third surface along the first direction is circular.

Optionally, the insulating and sealing structure includes a lower insulating portion. Along the first direction, the lower insulating portion is at least disposed on a side of the second fixing portion away from the first surface. The sealing portion is connected to the lower insulating portion.

Optionally, the lower insulating portion is provided with a through hole, and a gap is provided between an edge of the through hole and the terminal.

Optionally, the lower insulating portion includes a fourth surface close to the second fixing portion along the first direction. The fourth surface includes a first annular plane disposed along the edge of the through hole. Along the first direction, a projection of the first annular plane covers the third surface.

Optionally, the lower insulating portion includes a second annular plane disposed opposite to the first annular plane along the first direction. Along the first direction, the first end surface protrudes beyond the second annular plane in the direction away from the first surface, and a linear distance between the first end surface and the second annular plane is H₅, where $0.3 mm \leq {H}_{5} \leq 0.8 mm .$

Optionally, along the first direction, a ratio of the compression deformation amount of the sealing portion to a dimension of the sealing portion in a natural state is $\frac{B - b}{B}$, where $10 % \leq \frac{B - b}{B} \leq 60 % .$

Optionally, the transition portion includes a rounded chamfer, H₂ is a radius of the rounded chamfer, where 0.1 mm ≤ H₂ ≤ 0.3 mm.

Optionally, the second fixing portion further extends from the second surface along the first direction toward a direction away from the lid base, so that the second fixing portion protrudes beyond the lid base along the first direction.

Optionally, the lid further includes a first fixing portion disposed around the terminal. The first fixing portion extends from the first surface at least along the first direction toward the direction away from the lid base. The insulating and sealing structure includes an upper insulating portion. The upper insulating portion is connected between the terminal and the first fixing portion.

Based on the same inventive concept, a second aspect of the present disclosure provides a cell. The cell includes: an electrode assembly and the lid assembly as described in the first aspect, and the lid assembly is electrically connected to the electrode assembly through a connecting member. The insulating and sealing structure includes a lower insulating portion. The lower insulating portion includes a second annular plane. Along the first direction, a minimum linear distance from the connecting member to the second annular plane opposite thereto is H₃, where ${H}_{3} \geq 0.3 mm .$

Optionally, the connecting member is connected to the first end surface through welding. Along the first direction, a minimum linear distance from a region of the second annular plane close to the terminal to the connecting member is H₄, where $0.5 mm \leq {H}_{4} \leq 1.0 mm ;$ the insulating and sealing structure includes a lower insulating portion. The lower insulating portion is provided with a through hole. The connecting member is welded to the first end surface and forms a weld mark on a surface of the connecting member close to the electrode assembly. A minimum distance from an edge of the weld mark to an edge of the through hole is L₁, where ${L}_{1} \geq 2.5 mm .$

Optionally, the insulating and sealing structure includes a lower insulating portion. The lower insulating portion includes a fifth surface away from the second fixing portion along the first direction. The fifth surface is provided with a positioning structure protruding toward the electrode assembly along the first direction, and the positioning structure is provided for positioning the connecting member;
the positioning structure includes a first protruding portion. Along the first direction, a projection of the connecting member covers the first protruding portion, and an edge of the first protruding portion at least partially overlaps with an edge of the projection of the connecting member; or
the positioning structure includes a second protruding portion. The second fixing portion is disposed on an outer periphery of the connecting member along the edge of the connecting member, and the second fixing portion protrudes, toward the electrode assembly along the first direction, beyond a welding surface of the connecting member that is welded to the first end surface.

Based on the same inventive concept, a third aspect of the present disclosure provides a lid assembly method, including:
a preparation step, in which the lid is placed in a positioning mold, the positioning mold supports the lid, the sealing portion is connected to the lid or the terminal, the positioning mold is formed with a positioning groove, the terminal includes the first end surface, at least one of an edge of the positioning groove and the terminal is provided with a transition portion around an edge of the first end surface;
an insertion step, in which the first end surface of the terminal passes through the lid, and the terminal is guided into the positioning groove through the transition portion, the positioning groove positions the terminal along the second direction, the second direction is perpendicular to the centerline of the terminal; and
a fixing step, in which the sealing portion is in a compressed state, and the terminal is fixed on the lid.

Optionally, the lid assembly method further includes:
a connection step, in which the lower insulating portion is connected to a side of the lid close to the first end surface, making the first end surface to pass through the lower insulating portion and protrude beyond the lower insulating portion along the first direction, the first direction is a centerline direction of the terminal. The fixing step includes: injection molding for forming the upper insulating portion, and the terminal is fixedly connected with the lid through the upper insulating portion.

### Technical effect

As is apparent from the foregoing, in the lid assembly, the assembly method therefor, and the cell provided by the present disclosure, the first end surface of the terminal is designed to protrude beyond the third surface of the second fixing portion, and a distance between the first end surface and the third surface, measured along the first direction, is greater than a sum of the compression deformation amount of the sealing portion along the first direction and the dimension of the transition portion along the first direction. Accordingly, whether the sealing portion is in a compressed state or in a natural state, both the first end surface and a portion of the circumferential sidewall of the terminal adjacent to the first end surface may protrude beyond the third surface. Beneath the second fixing portion, a portion of the terminal protruding beyond the third surface may be positionally adjusted along the second direction to change the overall position of the terminal, so that the centerline of the terminal tends toward coincidence with a centerline of an inner bore defined by the second fixing portion. Such design helps reduce a deviation distance, along the second direction, between the centerline of the terminal and the centerline of a receiving space, thereby achieving the objective of improving the positioning accuracy between the terminal and the lid.

When the terminal is positioned with a higher accuracy, the compressive force applied to the sealing portion by the terminal and the second fixing portion may be made more uniform, which facilitates improved sealing performance of the sealing portion in its compressed state, thereby enhancing the safety performance of a cell employing the lid assembly according to the present embodiment.

In addition, this embodiment improves the positioning accuracy of the terminal while not additionally forming recessed or protruding structures on the terminal, which does not increase the forming difficulty and cost of the terminal.

### BRIEF DESCRIPTION OF THE DRAWINGS

In order to more clearly illustrate the technical solutions in the present disclosure or related technology, the following will briefly introduce the drawings required for use in the description of the embodiments or related technology. Clearly, the drawings in the following description are merely embodiments of the present disclosure. For ordinary technicians in the field, other drawings may also be obtained based on these drawings without creative labor.
FIG. 1 is a top view of a lid assembly according to an embodiment of the present disclosure.
FIG. 2 is a partial sectional diagram taken along line A-A in FIG. 1.
FIG. 3 is an enlarged diagram of a first structure of a portion B in FIG. 2.
FIG. 4 is an enlarged diagram of a second structure of a portion B in FIG. 2.
FIG. 5 is an enlarged diagram of a portion C in FIG. 4.
FIG. 6 is a partial sectional diagram of a lid assembly with a second structure according to an embodiment of the present disclosure when a sealing portion is in a natural state.
FIG. 7 is a schematic diagram of a cell according to an embodiment of the present disclosure.
FIG. 8 is a partial sectional diagram taken along line E-E in FIG. 7.
FIG. 9 is an enlarged diagram of a portion F in FIG. 8.
FIG. 10 is a partial sectional diagram taken along line D-D in FIG. 7.
FIG. 11 is a flow diagram of an assembly method of a lid assembly with a second structure according to an embodiment of the present disclosure.
FIG. 12 is a partial sectional diagram of a lid of a lid assembly with a second structure being installed in a positioning mold according to an embodiment of the present disclosure.
FIG. 13 is a partial sectional diagram of a sealing portion of a lid assembly with a second structure being connected to a terminal according to an embodiment of the present disclosure.
FIG. 14 is a partial sectional diagram of a terminal of a lid assembly with a second structure being inserted through an accommodation space and a sealing portion being in a natural state according to an embodiment of the present disclosure.
FIG. 15 is a partial sectional diagram of a sealing portion of a lid assembly with a second structure being in a compressed state according to an embodiment of the present disclosure.
FIG. 16 is a partial sectional diagram of a sealing portion of a lid assembly with a second structure being in a compressed state and fixing a terminal on a lid according to an embodiment of the present disclosure.

### DESCRIPTION OF THE EMBODIMENTS

To make the purpose, technical solutions and advantages of the present disclosure clearer, the present disclosure is further described in detail below in combination with specific embodiments and with reference to the accompanying drawings.

It should be noted that: unless otherwise specifically stated, the relative arrangement of components, numerical expressions and numerical values set forth in these embodiments do not limit the scope of the present disclosure.

Meanwhile, it should be understood that, for convenience of description, the dimensions of various parts shown in the drawings are not drawn according to actual proportional relationships.

The following description of at least one exemplary embodiment is actually merely illustrative and in no way serves as any limitation on the present disclosure and its application or use.

It should be noted that, unless otherwise defined, technical terms or scientific terms used in the embodiments of the present disclosure should have the usual meanings understood by persons with general skills in the field to which the present disclosure belongs. "First", "second" and similar words used in the embodiments of the present disclosure do not indicate any order, quantity or importance, but are only used to distinguish different components. Similar words such as "include" or "contain" mean that the elements or objects appearing before the word cover the elements or objects listed after the word and their equivalents, without excluding other elements or objects. Similar words such as "connect" or "connected" are not limited to physical or mechanical connections, but may include electrical connections, whether direct or indirect. "Upper", "lower", "left", "right", etc. are only used to indicate relative positional relationships. When the absolute position of the described object changes, the relative positional relationship may also change accordingly.

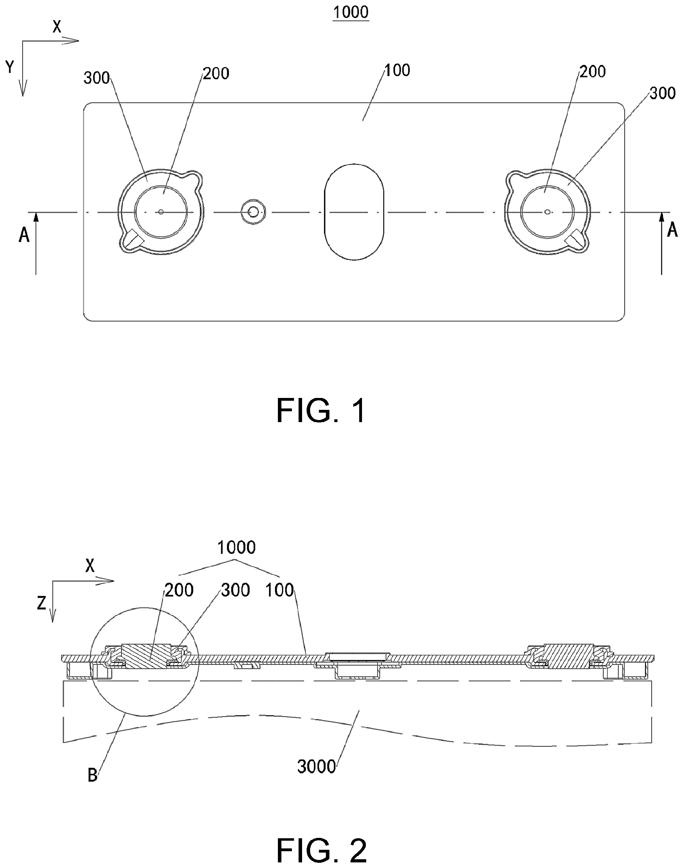

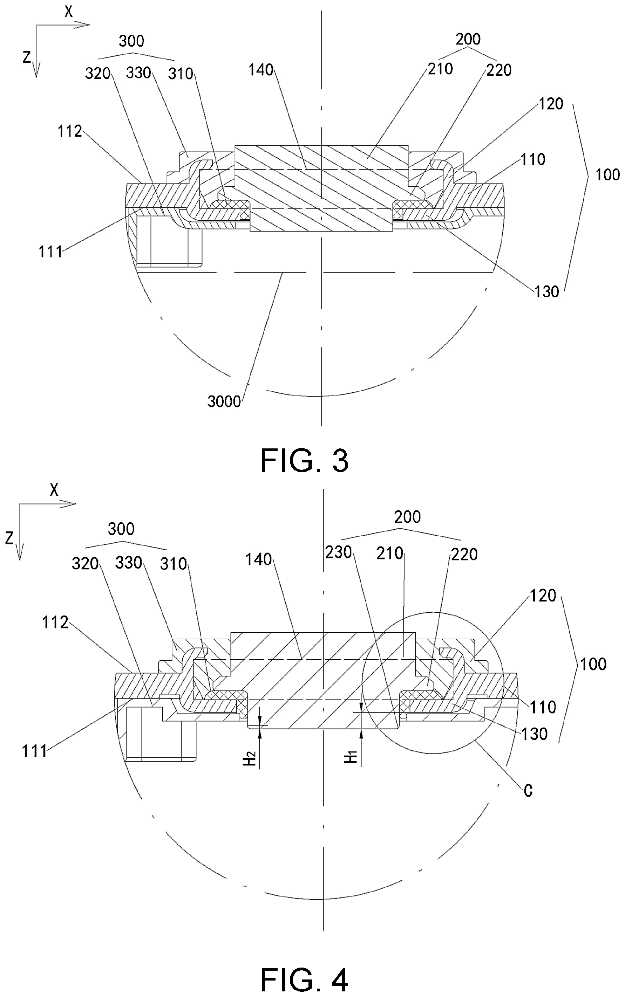

FIG. 1 shows a top view of a lid assembly 1000, FIG. 2 shows a partial sectional diagram taken along line A-A in FIG. 1, and FIG. 3 shows a partial enlarged diagram of a first structure of a portion B in FIG. 2.

As shown in FIG. 1 and FIG. 2, in some embodiments, the lid assembly 1000 includes a lid 100, a terminal 200 and an insulating and sealing structure 300, and the lid 100 and the terminal 200 are connected through the insulating and sealing structure 300. Exemplarily, the terminal 200 may include positive electrode terminals and negative electrode terminals. The positive electrode terminals are provided for electrical connection with positive tabs of an electrode assembly 3000 (the positive tabs are formed by current collectors of positive electrode sheets of the electrode assembly 3000 extending outward) to form positive electrodes of the cell, and the negative terminals are provided for electrical connection with negative tabs of the electrode assembly 3000 (the negative tabs are formed by current collectors of negative electrode sheets of the electrode assembly 3000 extending outward) to form negative electrodes of the cell.

As shown in FIG. 2 and FIG. 3, the lid 100 includes a lid base 110, a first fixing portion 120 and a second fixing portion 130. The first fixing portion 120 and the second fixing portion 130 are configured to surround the terminal 200. The lid base 110 includes a first surface 112 and a second surface 111 configured opposite to each other along a first direction (such as direction Z in FIG. 3). The first fixing portion 120 extends from the first surface 112 at least along the first direction toward a direction away from the lid base 110. The second fixing portion 130 extends from the second surface 111 at least along a second direction (such as direction X in FIG. 3) toward a centerline of the terminal 200. The first fixing portion 120 and the second fixing portion 130 define an accommodation space 140. The terminal 200 and the insulating and sealing structure 300 are at least partially located in the accommodation space 140. The first direction is a centerline direction of the terminal 200, and the second direction is perpendicular to the first direction.

Exemplarily, when the lid assembly 1000 is applied to a cell, the second surface 111 is close to the electrode assembly 3000.

Exemplarily, the first fixing portion 120 and the lid base 110 may be connected by welding or integral molding. Similarly, the second fixing portion 130 and the lid base 110 may be connected by welding or integral molding. It should be noted that the method of connecting the first fixing portion 120 and the lid base 110 may be the same as or different from the method of connecting the second fixing portion 130 and the lid base 110. Integral molding is preferred to achieve a more stable structure.

It should be noted that the first fixing portion 120 extends from the first surface 112 at least along the first direction toward the direction away from the lid base 110, which does not mean that an end of the first fixing portion 120 close to the lid base 110 is configured on the first surface 112, but only means that the first fixing portion 120 extends beyond the lid base 110 from the first surface 112, and the first fixing portion 120 may also extend into a space between the first surface 112 and the second surface 111. Similarly, the second fixing portion 130 extends from the second surface 111 at least along the second direction toward the centerline of the terminal 200, which also does not mean that an end of the second fixing portion 130 close to the lid base 110 is configured on the second surface 111, and the second fixing portion 130 may also extend into a space between the first surface 112 and the second surface 111.

Specifically, the terminal 200 includes a columnar terminal base 210, and a protruding portion 220 protruding from the terminal base 210 along the second direction. The insulating and sealing structure 300 includes a sealing portion 310, a lower insulating portion 320 and an upper insulating portion 330. The sealing portion 310 is at least configured between the protruding portion 220 and the second fixing portion 130 in order to enable the sealing portion 310 to achieve a better sealing effect. During the process of assembling the lid assembly 1000, it is necessary to make the protruding portion 220 and the second fixing portion 130 cooperate to extrude the sealing portion 310, so that the sealing portion 310 is compressed and deformed. After the sealing portion 310 is compressed and deformed, the terminal 200 and the lid 100 may be fixedly connected through the upper insulating portion 330, so that the sealing portion 310 is in a compressed state.

The Applicant's research indicates that, when a magnitude of deviation between the centerline of the terminal 200 and a centerline of the accommodation space 140 is relatively small, the protruding portion 220 of the terminal 200 exerts a more uniform compressive force on the sealing portion 310, thereby enabling the sealing portion 310 to achieve superior sealing performance. Conversely, when the magnitude of deviation between a centerline of the protruding portion 220 of the terminal 200 and the centerline of the accommodation space 140 is relatively large, the sealing portion 310 may exhibit a larger amount of deformation on one side (with respect to the centerline of the terminal 200) and a smaller amount of deformation on the opposite side. The side of the sealing portion 310 with the smaller amount of deformation exhibits inferior sealing performance. When the lid assembly 1000 of the present embodiment is applied to a cell, issues such as electrolyte leakage may occur at the location where the sealing portion 310 undergoes the smaller amount of deformation, resulting in degraded safety performance of the cell.

In order to improve the positioning accuracy between the terminal 200 and the accommodation space 140 of the lid 100, the present disclosure provides lid assemblies 1000 with other structures.

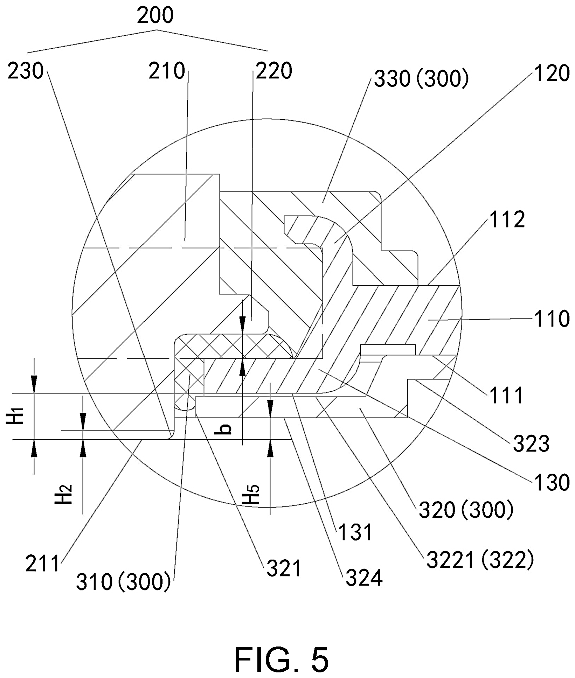

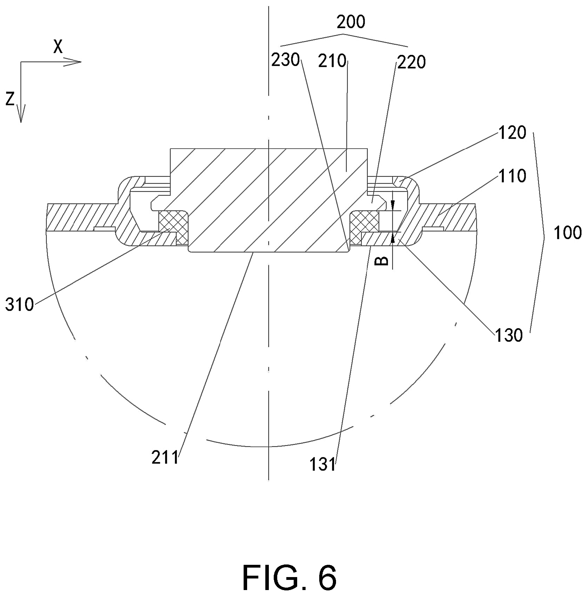

FIG. 4 is an enlarged diagram of a second structure of a portion B in FIG. 2. FIG. 5 is an enlarged diagram of a portion C in FIG. 4. FIG. 6 is a partial sectional diagram of a lid assembly with a second structure when a sealing portion 310 is in a natural state.

As shown in FIG. 4, FIG. 5 and FIG. 6, in some embodiments, the lid assembly 1000 includes: the lid 100, the terminal 200 and the insulating and sealing structure 300. The lid 100 and the terminal 200 are connected through the insulating and sealing structure 300. The lid 100 includes the lid base 110 and the second fixing portion 130 configured surrounding the terminal 200. The lid base 110 includes the first surface 112 and the second surface 111 configured opposite to each other along the first direction. The second fixing portion 130 extends from the second surface 111 at least along the second direction toward the centerline of the terminal 200. Along the first direction, the terminal 200 is at least partially configured on a side of the second fixing portion 130 close to the first surface 112, and the insulating and sealing structure 300 includes the sealing portion 310 configured between the second fixing portion 130 and the terminal 200. The second fixing portion 130 and the terminal 200 clamp the sealing portion 310 along the first direction, so that the sealing portion 310 is in a compressed state. The first direction is the centerline direction of the terminal 200, and the second direction is perpendicular to the first direction. Along the first direction, the second fixing portion 130 includes the third surface 131 away from the first surface 112. The terminal 200 includes the first end surface 211 close to the second fixing portion 130. The first end surface 211 protrudes beyond the third surface 131 in a direction away from the first surface 112. A transition portion 230 is configured between the first end surface 211 and a circumferential sidewall of the terminal 200. Along the first direction, a linear distance between the first end surface 211 and the third surface 131 is H₁, a dimension of the transition portion 230 is H₂, and a compression deformation amount of the sealing portion 310 is B-b, where H₁> B-b + H₂.

It should be noted that, along the first direction, a dimension of the sealing portion 310 in a natural state is B, and a dimension of the sealing portion 310 in a compressed state is b.

Exemplarily, the first end surface 211 is connected to a circumferential sidewall of the terminal base 210 through the transition portion 230.

Exemplarily, the transition portion 230 includes an arc surface or an inclined surface.

Taking the structure and direction shown in FIG. 5 as an example for illustration, in this embodiment, the first end surface 211 protrudes beyond the third surface 131 in the direction away from the first surface 112. Therefore, below the second fixing portion 130, the first end surface 211 of the terminal 200 and a portion of a circumferential sidewall surrounding the first end surface 211 is exposed relative to the third surface 131. Then, when the terminal 200 is mounted on the lid 100, below the second fixing portion 130, position adjustment along the second direction may be performed on the portion of the terminal 200 exposed relative to the third surface 131 to change the overall position of the terminal 200, so that the centerline of the terminal 200 tends toward coincidence with a centerline of the inner bore defined by the second fixing portion 130. As shown in FIG. 4, such design helps to reduce a deviation distance between the centerline of the terminal 200 and the centerline of the accommodation space 140 along the second direction, thereby achieving the purpose of improving the positioning accuracy between the terminal 200 and the lid 100.

Meanwhile, in this embodiment, the terminal 200 (mainly through the protruding portion 220) and the second fixing portion 130 both extrude the sealing portion 310 along the first direction. Then, it may be understood that when the sealing portion 310 is in a compressed state under pressure deformation, the dimension of the sealing portion 310 along the first direction is smaller, as shown in FIG. 4 and FIG. 5. Correspondingly, in this condition, along the first direction, a distance that the first end surface 211 protrudes beyond the third surface 131 is greater.

As shown in FIG. 6, when the sealing portion 310 is in a natural state without deformation, the dimension of the sealing portion 310 along the first direction is larger. Correspondingly, in this condition, along the first direction, the distance that the first end surface 211 protrudes beyond the third surface 131 is shorter.

A difference between the above two dimensions of the sealing portion 310 is the compression deformation amount of the sealing portion 310 along the first direction (hereinafter referred to as the deformation amount of the sealing portion 310). Correspondingly, when the sealing portion 310 transitions from the natural state to the compressed state, along the first direction, a numerical value of a distance change that the first end surface 211 protrudes beyond the third surface 131 is equal to the deformation amount of the sealing portion 310.

In combination with the aforementioned content, when the sealing portion 310 is in a compressed state, if a distance between the first end surface 211 and the third surface 131 along the first direction is able to be greater than the deformation amount of the sealing portion 310, then the distance minus the deformation amount of the sealing portion 310 is still greater than zero. In other words, when the sealing portion 310 is in a natural state, the first end surface 211 will still protrude beyond the third surface 131 in the direction away from the first surface 112. In this condition, position adjustment along the second direction may still be performed on the portion of the terminal 200 exposed relative to the third surface 131 to change the overall position of the terminal 200, thereby achieving the purpose of improving the positioning accuracy between the terminal 200 and the lid 100.

When performing position adjustment on the portion of the terminal 200 protruding beyond the third surface 131, an acting force may be applied to the circumferential sidewall of the terminal 200 to drive the terminal 200 to move along the second direction. A device (hereinafter referred to as a force-applying device) for applying the acting force to the circumferential sidewall of the terminal 200 typically gradually moves close to the first end surface 211 from below the first end surface 211 and align with an edge of the first end surface 211, then continue to rise to contact the circumferential sidewall of the terminal 200.

During the process of the force-applying device moving close to the first end surface 211 from bottom to top, it is difficult to accurately align with the edge of the first end surface 211. In order to provide directional guidance for the force-applying device, this embodiment provides the transition portion 230 between the first end surface 211 and the circumferential sidewall of the terminal 200. After the force-applying device moves close to the first end surface 211, as long as the force-applying device aligns with the transition portion 230, when the force-applying device abuts against the transition portion 230, the force-applying device may slide along the transition portion 230 toward the circumferential sidewall of the terminal 200, facilitating the force-applying device to apply the acting force to the circumferential sidewall of the terminal 200 and adjust the position of the terminal 200.

When the terminal 200 is provided with the transition portion 230, the dimension H₁ requires further design consideration. If H₁ is too small, then although, when the sealing portion 310 is in a natural state, the first end surface 211 may protrude beyond the third surface 131, the portions surrounding the first end surface 211 and protruding beyond the third surface 131 are all part of the transition portion 230 rather than the circumferential sidewall of the terminal 200. As a result, the force-applying device may, while sliding along the transition portion 230, be unable to contact the circumferential sidewall of the terminal 200 due to interference with the third surface 131, thereby making it difficult to adjust the position of the terminal 200.

In order to avoid the aforementioned problem, this embodiment designs H₁ to satisfy a range of H₁ > B-b+H₂. When the sealing portion 310 is in a natural state, not only may the first end surface 211 be ensured to protrude beyond the third surface 131, but also the circumferential sidewall of the terminal 200 may be ensured to protrude beyond the third surface 131, facilitating the application of the acting force to the circumferential sidewall of the terminal 200 through the force-applying device to adjust the position of the terminal 200.

In the present embodiment, the lid assembly 1000 is configured such that the first end surface 211 of the terminal 200 protrudes beyond the third surface 131 of the second fixing portion 130, and the distance between the first end surface 211 and the third surface 131 measured along the first direction is greater than a sum of the compression deformation amount of the sealing portion 310 along the first direction and the dimension of the transition portion 230 along the first direction. Accordingly, whether the sealing portion 310 is in a compressed state or in a natural state, both the first end surface 211 and a portion of the circumferential sidewall of the terminal 200 adjacent to the first end surface 211 will protrude beyond the third surface 131. Below the second fixing portion 130, a portion of the terminal 200 that protrudes beyond the third surface 131 is adjustable in position along the second direction to change the overall position of the terminal 200, thereby causing the centerline of the terminal 200 to tend to coincide with the centerline of the inner bore defined by the second fixing portion 130. Such design facilitates a reduction, along the second direction, in the deviation distance between the centerline of the terminal 200 and the centerline of the accommodation space 140, thereby achieving an improvement in positioning accuracy between the terminal 200 and the lid 100.

When the positioning accuracy of the terminal 200 is high, the compressive force exerted by the terminal 200 together with the second fixing portion 130 on the sealing portion 310 may be rendered more uniform, which facilitates improvement of the sealing performance of the sealing portion 310 in its compressed state, thereby enhancing the safety performance of a cell employing the lid assembly 1000 of the present embodiment.

In addition, this embodiment improves the positioning accuracy of the terminal 200 while not additionally forming recessed or protruding structures on the terminal 200, which does not increase the forming difficulty and cost of the terminal 200.

In some embodiments, a projection of the portion of the terminal 200 protruding beyond the third surface 131 along the first direction is circular.

Exemplarily, the transition portion 230 has an annular structure surrounding the centerline of the terminal 200.

When positioning the terminal 200 by means of a slot, the portion of the terminal 200 that protrudes beyond the third surface 131 is required to be accurately inserted into the slot. If a projection of the portion along the first direction is polygonal, then, when the terminal 200 is aligned with the slot, it is necessary not only to adjust the position of the terminal 200 along the second direction, but also to rotate the terminal 200 so as to bring the corresponding edges of the terminal 200 and the slot into alignment, which is relatively inconvenient. If the projection of the portion along the first direction is circular, then, when the terminal 200 is aligned with the slot, it suffices to adjust the position of the terminal 200 along the second direction, thereby obviating the need to rotate the terminal 200, which helps reduce alignment difficulty, increases the assembly efficiency of the lid assembly 1000, and is conducive to mass production.

As shown in FIG. 4 and FIG. 5, in some embodiments, the insulating and sealing structure 300 includes the lower insulating portion 320. Along the first direction, the lower insulating portion 320 is at least disposed on a side of the second fixing portion 130 away from the first surface 112, and the sealing portion 310 is connected to the lower insulating portion 320.

Exemplarily, a projection of the lower insulating portion 320 along the first direction may cover most of an area of the second fixing portion 130, and cover most of an area of the second surface 111.

Exemplarily, a thickness of a portion of the lower insulating portion 320 corresponding to the second fixing portion 130 may be the same as or different from a thickness of a portion corresponding to the second surface 111.

Exemplarily, a lower end of the sealing portion 310 may extend beyond the third surface 131 along the first direction.

In the cell, in order to maintain insulation between the electrode assembly 3000 and the lid 100, the lower insulating portion 320 is provided at least on a side of the second fixing portion 130 away from the first surface 112. In accordance with the foregoing, the sealing portion 310 is disposed above the second fixing portion 130 (i.e., on a side proximate to the first surface 112), and the lower insulating portion 320 is disposed below the second fixing portion 130. When the sealing portion 310 is connected to the lower insulating portion 320, the two may wrap the second fixing portion 130 so as to form a continuous insulating structure between the second fixing portion 130 and the terminal 200, thereby enhancing the insulation performance between the terminal 200 and the lid 100.

Meanwhile, the sealing portion 310 is connected to the lower insulating portion 320, and the lower insulating portion 320 may also be configured to press an end of the sealing portion 310 that extends out of the accommodation space 140, so as to enhance the sealing performance of the sealing portion 310, further prevent leakage of electrolyte within the cell, and thereby improve the safety performance of the cell.

As shown in FIG. 4 and FIG. 5, in some embodiments, the lower insulating portion 320 is provided with a through hole 321, and a gap is provided between an edge of the through hole 321 and the terminal 200.

It should be noted that the through hole 321 corresponds to the inner hole defined by the second fixing portion 130, and the terminal 200 passes through the through hole 321.

The electrode assembly 3000 of the cell is located on a side of the lower insulating portion 320 away from the lid 100. In order to facilitate the electrical connection between the terminal 200 and a tab of the electrode assembly 3000, the terminal 200 may pass through the lower insulating portion 320, so that the first end surface 211 is also located on a side of the lower insulating portion 320 away from the lid 100.

It should be noted that, when the lower insulating portion 320 is connected to the lid 100, the two terminals 200 have already been secured to the lid 100. In actual production, an outer diameter of each terminal 200 is subject to dimensional tolerances that meet process requirements, and assembly tolerances likewise exist between each terminal 200 and the lid 100 that meet process requirements. If a bore diameter of the through hole 321 is too small, it becomes difficult to simultaneously sleeve the lower insulating portion 320 onto both terminals 200.

To avoid the aforementioned issues, in this embodiment the terminal 200 and the through hole 321 are configured to be in a clearance-fit relationship, thereby providing an assembly clearance therebetween so as to permit the lower insulating portion 320 to be simultaneously sleeved over the two terminals 200, which helps reduce the assembly difficulty of the lid assembly 1000 and improve assembly efficiency.

As shown in FIG. 4 and FIG. 5, in some embodiments, the lower insulating portion 320 includes a fourth surface 322 close to the second fixing portion 130 along the first direction. The fourth surface 322 includes a first annular plane 3221 provided along the edge of the through hole 321. Along the first direction, a projection of the first annular plane 3221 covers the third surface 131.

Exemplarily, the bore diameter of the through hole 321 is smaller than a bore diameter of the inner bore defined by the second fixing portion 130.

In accordance with the foregoing, the second fixing portion 130 is at least provided on a side of the second fixing portion 130 away from the first surface 112. When connecting the lower insulating portion 320 to the lid 100, if the second fixing portion 130 protrudes beyond the second surface 111, then clearance design needs to be performed on the lower insulating portion 320 to prevent interference between the lower insulating portion 320 and the second fixing portion 130. Therefore, in this embodiment, the first annular plane 3221 corresponding to the second fixing portion 130 is provided on the lower insulating portion 320, and the projection of the first annular plane 3221 along the first direction is designed to cover the third surface 131 of the second fixing portion 130. In this condition, the second fixing portion 130 as a whole will not exceed the range of the first annular plane 3221 along the second direction, and regardless of what structure is provided in other areas of the lower insulating portion 320 except the first annular plane 3221, no interference with the second fixing portion 130 will occur, which helps to achieve reliable connection between the lower insulating portion 320 and the lid 100.

Moreover, by configuring the projection of the first annular plane 3221 along the first direction to cover the third surface 131 of the second fixing portion 130, it can further be ensured that the lower insulating portion 320 completely covers the second fixing portion 130, thereby avoiding contact between the electrode assembly 3000 within the cell and the second fixing portion 130, which contact could otherwise result in an internal short circuit of the cell, thereby enhancing the safety performance of the cell.

As shown in FIG. 4 and FIG. 5, in some embodiments, the lower insulating portion 320 includes a second annular plane 324 configured opposite to the first annular plane 3221 along the first direction. Along the first direction, the first end surface 211 protrudes beyond the second annular plane 324 toward the direction away from the first surface 112, and a linear distance between the first end surface 211 and the second annular plane 324 is H₅, where 0.3 mm ≤ H₅ ≤ 0.8 mm.

Exemplarily, H₅ may be 0.3 mm, 0.4 mm, 0.5 mm, 0.6 mm, 0.7 mm or 0.8 mm.

In view of the foregoing, it is understood that the first end surface 211 of the terminal 200 is to be welded to the tab of the electrode assembly 3000 so as to establish electrical connection. If H₅ is too small, the first end surface 211 and the second annular plane 324 become excessively close to each other along the first direction, whereby heat generated during welding is substantially transmitted to the lower insulating portion 320, causing partial thermal damage to the lower insulating portion 320 and, consequently, insulation failure. If H₅ is too large, the terminal 200 occupies an excessive amount of the internal height space of the cell, encroaching upon the space for accommodating the electrode assembly 3000, thereby resulting in a reduced energy density of the cell.

In order to avoid the foregoing issues, in this embodiment H₅ is specified to be within the range of 0.3 mm ≤ H₅ ≤ 0.8 mm, inclusive. This can reduce the risk of thermal damage to the lower insulating portion 320 and ensure that insulation is maintained between the lid 100 and the electrode assembly 3000, thereby improving the safety performance of the cell. At the same time, a vertical space within the cell occupied by the terminal 200 may be reduced, allowing the electrode assembly 3000 of larger dimensions to be accommodated within the cell, thereby contributing to an increase in the energy density of the cell.

As shown in FIG. 4, FIG. 5 and FIG. 6, in some embodiments, along the first direction, a ratio of the compression deformation amount of the sealing portion 310 to the dimension of the sealing portion 310 in a natural state is $\frac{B - b}{B}$, where $10 % \leq \frac{B - b}{B} \leq 60 %$.

Exemplarily, $\frac{B - b}{B}$ may be 10 %, 15 %, 20 %, 25 %, 30 %, 35 %, 40 %, 45 %, 50 %, 55 % or 60 %.

If $\frac{B - b}{B}$ is excessively large, this indicates that a strain of the sealing portion 310 during the transition from its natural state to its compressed state is excessive. During assembly of the lid assembly 1000, the sealing portion 310 may undergo material stress relaxation due to over-compression, resulting in irreversible deformation and, consequently, loss of sealing capability.

Conversely, if $\frac{B - b}{B}$ is excessively small, then during assembly of the lid assembly 1000 the sealing portion 310 may deform insufficiently, such that it cannot reliably conform to and seal against the surface of the second fixing portion 130 or the surface of the terminal 200, thereby creating a risk of leakage of the cell.

In order to avoid the aforementioned issues, in the embodiments of the present disclosure, $\frac{B - b}{B}$ is designed to satisfy a range of $10 % \leq \frac{B - b}{B} \leq 60 %$, so as to ensure that the deformation of the sealing portion 310 remains within recoverable elastic deformation and that, after deformation, the sealing portion 310 may reliably conform to and contact both the surface of the second fixing portion 130 and the surface of the terminal 200, thereby enabling the sealing portion 310 to achieve improved sealing performance and contributing to enhanced safety performance of the cell.

As shown in FIG. 4 and FIG. 5, in some embodiments, the transition portion 230 includes a rounded chamfer, H₂ is a radius of the rounded chamfer, where 0.1 mm ≤ H₂ ≤ 0.3 mm.

Exemplarily, H₂ may be 0.1 mm, 0.15 mm, 0.2 mm, 0.25 mm or 0.3 mm.

The transition portion 230 is formed as a rounded chamfer, i.e., the first end surface 211 and the circumferential sidewall of the terminal 200 are joined via an arcuate transitional surface, which both reduces the risk of stress concentration at the terminal 200 that would otherwise result from the formation of a sharp-cornered structure and prevents the force-applying device, when sliding along the transition portion 230, from contacting an edge, thereby avoiding damage to the force-applying device or to the terminal 200.

It should be understood that the planar portion of the first end surface 211 may be effectively connected to the tab of the electrode assembly 3000. Where the transition portion 230 includes the rounded corner, an excessively large H₂ not only causes the transition portion 230 to encroach upon the region of the circumferential sidewall of the terminal 200, but also causes the transition portion 230 to encroach upon a larger region of the first end surface 211, resulting in a reduced area of the planar portion of the first end surface 211, which in turn adversely affects the connection reliability between the electrode assembly 3000 and the terminal 200 and the current-carrying capacity. Conversely, if H₂ is excessively small, the transition portion 230 may hardly provide an adequately effective guiding function for the force-applying device.

To avoid the foregoing issues, in this embodiment H₂ is specified to be within the range of 0.1 mm ≤ H₂ ≤ 0.3 mm, so as to ensure that the transition portion 230 may provide a relatively effective guiding function for the force-applying device, while also ensuring that the planar portion of the first end face 211 has a sufficiently large area, thereby enabling the electrode assembly 3000 and the terminal 200 to form a reliable electrical connection with favorable electrical performance.

As shown in FIG. 4 and FIG. 5, in some embodiments, the second fixing portion 130 further extends from the second surface 111 along the first direction toward a direction away from the lid base 110, so that the second fixing portion 130 protrudes from the lid base 110 along the first direction.

A portion of the second fixing portion 130 close to the lid base 110 extends along the first direction toward the direction away from the lid base 110, and a portion close to its free end extends toward the centerline of the terminal 200, that is, the second fixing portion 130 has a bent structure.

By way of example and with reference to the structure and orientation shown in FIG. 4 and FIG. 5, the second fixing portion 130 projects downward beyond the second surface 111, thereby enabling downward displacement of the accommodation space 140. Consequently, the height by which the terminal 200 projects upward beyond the first surface 112 is correspondingly reduced, which facilitates a reduction in the overall space occupied by the cell. When the cell is assembled into a battery pack, a greater number of cells may be accommodated within the battery pack, thereby increasing the energy density of the battery pack.

As shown in FIG. 4 and FIG. 5, in some embodiments, the lid 100 further includes the first fixing portion 120 disposed surrounding the terminal 200. The first fixing portion 120 extends from the first surface 112 at least along the first direction toward the direction away from the lid base 110. The insulating and sealing structure 300 includes the upper insulating portion 330. The upper insulating portion 330 is connected between the terminal 200 and the first fixing portion 120.

Exemplarily, the upper insulating portion 330 may be formed by injection molding of an insulating material.

Exemplarily, the upper insulating portion 330 is at least located within the accommodation space 140, and fills a space within the accommodation space 140 except for the terminal 200 and the sealing portion 310, so that an electrolyte in the cell is unable to leak outward through the accommodation space 140, thereby helping to improve the safety performance of the cell.

With reference to FIG. 4 and FIG. 5, it may be seen that a majority of the terminal 200 is disposed within the accommodation space 140. The portion of the upper insulating portion 330 that is connected between the terminal 200 and the first fixing portion 120 is located within the accommodation space 140 and has substantial contact areas with inner walls of both the terminal 200 and the first fixing portion 120. This configuration ensures a stable and reliable connection between the terminal 200 and the lid 100, so that the terminal 200 maintains compressive engagement with the sealing portion 310, thereby keeping the sealing portion 310 in a continuously compressed state and maintaining favorable sealing performance.

At the same time, the upper insulating portion 330 has insulation properties, which may achieve reliable insulation between the terminal 200 and the lid 100.

Based on the same inventive concept, combining the description of the lid assembly 1000 of the above various embodiments, this embodiment provides a cell, the cell has the corresponding technical effects of the lid assembly 1000 of the above various embodiments, which will not be described in detail here.

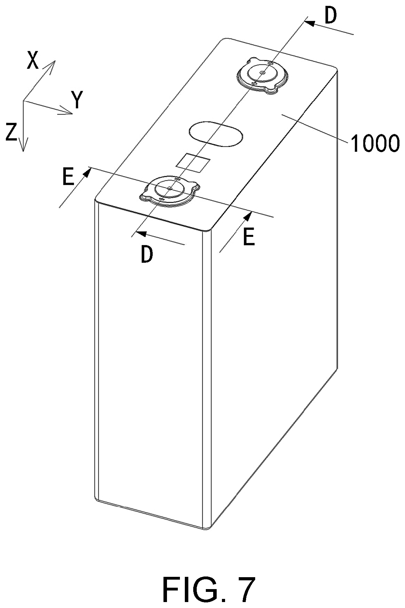

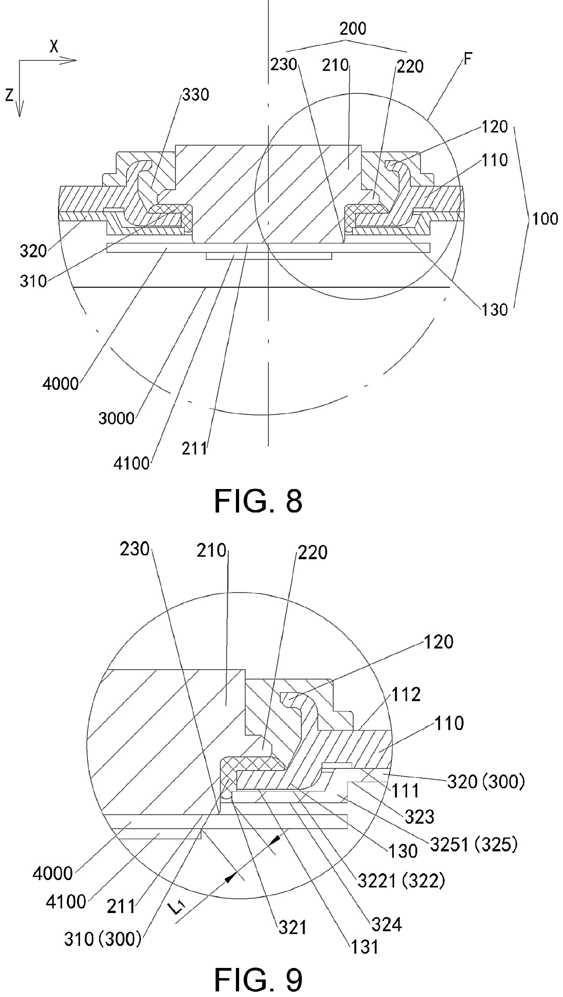

FIG. 7 shows a schematic diagram of the cell, FIG. 8 shows a partial sectional diagram taken along line E-E in FIG. 7.

As shown in FIG. 7 and FIG. 8, a cell includes the electrode assembly 3000 and the lid assembly 1000 as in the above various embodiments. The lid assembly 1000 is electrically connected to the electrode assembly 3000 through a connecting member 4000.

By way of example and with reference to the structure and orientation shown in FIG. 7, the tab of the electrode assembly 3000 may be electrically connected to a lower surface of the connecting member 4000, and the first end surface 211 of the terminal 200 may be electrically connected to an upper surface of the connecting member 4000, thereby electrically connecting the lid assembly 1000 to the electrode assembly 3000 via the connecting member 4000. It is further noted that, along the first direction, a projection of the first end surface 211 and the tab on the connecting member 4000 do not overlap each other.

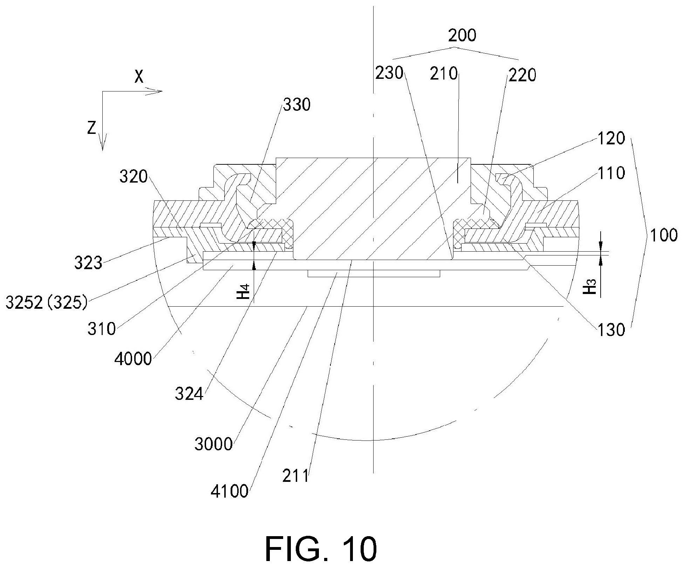

FIG. 10 shows a partial sectional diagram taken along line D-D in FIG. 7.

As shown in FIG. 10, in some embodiments, the insulating and sealing structure 300 includes the lower insulating portion 320. The lower insulating portion 320 includes the second annular plane 324. Along the first direction, a minimum linear distance from the connecting member 4000 to the second annular plane 324 opposite thereto is H₃, where H₃ ≥ 0.3 mm.

Heat is generated at a junction when the connecting member 4000 is electrically connected to a tab, and likewise when the connecting member 4000 is electrically connected to the terminal 200. If the dimension H₃ is unduly small, such heat will be transmitted in substantial amounts to the lower insulating portion 320, causing thermal damage to at least a portion of the lower insulating portion 320 and thereby resulting in insulation failure of the lower insulating portion 320.

To avoid the above problems, this embodiment designs H₃ to satisfy a range of H₃ ≥ 0.3 mm, which may reduce the risk of heat damage to the lower insulating portion 320, ensure insulation is maintained between the lid 100 and the electrode assembly 3000, and help improve the safety performance of the cell.

As shown in FIG. 10, in some embodiments, the connecting member 4000 is connected to the first end surface 211 through welding. Along the first direction, a minimum linear distance from the region of the second annular plane 324 close to the terminal 200 to the connecting member 4000 is H₄, where 0.5 mm ≤ H₄ ≤ 1.0 mm.

When the first end surface 211 of the terminal 200 is welded to the connecting member 4000, a substantial amount of heat is generated at the weld. If H₄ is too small, the aforementioned heat will be extensively transferred to the lower insulating portion 320, causing partial thermal damage thereto and consequently resulting in insulation failure of the lower insulating portion 320. Conversely, if H₄ is too large, the connecting member 4000 will occupy an excessive portion of the internal height of the cell, encroaching upon the space for disposing the electrode assembly 3000 and thereby reducing the energy density of the cell.

To avoid the foregoing issues, in this embodiment H₄ is designed to satisfy a range of 0.5 mm ≤ H₄ ≤ 1.0 mm. This configuration may reduce the risk of thermal damage to the lower insulating portion 320, ensure that insulation is maintained between the lid 100 and the electrode assembly 3000, and thereby contribute to improved safety performance of the cell. In addition, it may reduce the vertical space within the cell occupied by the connecting member 4000, enabling a larger-sized electrode assembly 3000 to be accommodated within the cell, thereby contributing to an increase in the energy density of the cell.

FIG. 9 shows an enlarged view of a portion F in FIG. 8.

As shown in FIG. 9, in some embodiments, the insulating and sealing structure 300 includes the lower insulating portion 320, and the lower insulating portion 320 is provided with the through hole 321. The connecting member 4000 is welded to the first end surface 211 and forms a weld mark 4100 on a surface of the connecting member 4000 close to the electrode assembly 3000, and a minimum distance from an edge of the weld mark 4100 to the edge of the through hole 321 is L₁, where L₁ ≥ 2.5 mm.

In view of the foregoing, it can be understood that, when the first end surface 211 of the terminal 200 is welded to the connecting member 4000, a substantial amount of heat is generated at the weld. Because such heat radiates outward in a substantially spherical manner, if the distance L₁ is excessively small, the weld mark 4100 will be in close proximity to the lower insulating portion 320. Consequently, the aforementioned heat will be transferred in significant amounts to the lower insulating portion 320, resulting in partial thermal damage thereto and, in turn, causing insulation failure of the lower insulating portion 320.

To avoid the above problems, this embodiment designs L₁ to satisfy a range of L₁ ≥ 2.5 mm, which may reduce the risk of heat damage to the lower insulating portion 320, ensure insulation is maintained between the lid 100 and the electrode assembly 3000, and help improve the safety performance of the cell.

As shown in FIG. 9, in some embodiments, the insulating and sealing structure 300 includes the lower insulating portion 320. The lower insulating portion 320 includes a fifth surface 323 extending away from the second fixing portion 130 along the first direction. The fifth surface 323 is provided with a positioning structure 325 protruding toward the electrode assembly 3000 along the first direction, and the positioning structure 325 is provided for positioning the connecting member 4000. The positioning structure 325 includes a first protruding portion 3251, and along the first direction, a projection of the connecting member 4000 covers the first protruding portion 3251. Moreover, an edge of the first protruding portion 3251 at least partially overlaps with an edge of the projection of the connecting member 4000.

By way of example, a position of coincidence between the edge of the first protruding portion 3251 and the edge of the projection of the connecting member 4000 may, along the second direction, be located on a side of the centerline of the terminal 200, on opposite sides of the centerline of the terminal 200, or on a plurality of sides surrounding the centerline of the terminal 200.

By way of example, the first protruding portion 3251 may be disposed around the centerline of the terminal 200 in a continuous or discontinuous manner.

In the present embodiment, the first protruding portion 3251 has a sidewall. When the terminal 200 extends through the lower insulating portion 320, the relative position between the terminal 200 and the lower insulating portion 320 is fixed in the second direction. Accordingly, the relative position, in the second direction, between the terminal 200 and the sidewall of the first protruding portion 3251 is likewise fixed.

When positioning of the connecting member 4000 relative to the terminal 200 is required, the sidewall of the connecting member 4000 may be aligned with a sidewall of the corresponding first protruding portion 3251, thereby achieving positional registration between the two. Moreover, because the relative position, along the second direction, between the terminal 200 and the sidewall of the first protruding portion 3251 is fixed, positional registration between the connecting member 4000 and the terminal 200 is likewise established. Accordingly, after electrical connection is effected between the connecting member 4000 and the terminal 200, the connection strength and electrical performance therebetween may be ensured.

In addition to being designed as the above structure, the positioning structure 325 may also be designed as other structures, which may also achieve positioning of the connecting member 4000.

As shown in FIG. 10, in some embodiments, the positioning structure 325 includes a second protruding portion 3252. The second protruding portion 3252 is disposed on an outer periphery of the connecting member 4000 along the edge of the connecting member 4000, and the second protruding portion 3252 protrudes, toward the electrode assembly 3000 along the first direction, beyond a welding surface of the connecting member 4000 that is welded to the first end surface 211.

Exemplarily, the second protruding portion 3252 may be located on a side of the centerline of the terminal 200 along the second direction, or located on opposite sides of the centerline of the terminal 200, or located on multiple sides surrounding the centerline of the terminal 200.

The second protruding portion 3252 has a sidewall, and when the terminal 200 passes through the lower insulating portion 320, the relative position between the terminal 200 and the lower insulating portion 320 along the second direction is fixed, so the relative position between the terminal 200 and the sidewall of the second protruding portion 3252 along the second direction is also fixed.

When positioning of the connecting member 4000 relative to the terminal 200 is required, the sidewall of the connecting member 4000 may be brought into abutment with a sidewall of the corresponding second protruding portion 3252. Moreover, because the relative position, along the second direction, between the terminal 200 and the sidewall of the second protruding portion 3252 is fixed, positional registration between the connecting member 4000 and the terminal 200 is likewise established. Accordingly, after electrical connection is effected between the connecting member 4000 and the terminal 200, the connection strength and electrical performance therebetween may be ensured.

It should further be noted that, because the second protruding portion 3252 protrudes, in the first direction toward the electrode assembly 3000, beyond the welding surface of the connecting member 4000 that is to be welded to the first end surface 211, when the connecting member 4000 is brought into abutment with the first end surface 211 of the terminal 200, the sidewall of the connecting member 4000 and the sidewall of the second protruding portion 3252 have some area of contact, thereby effecting stable positioning of the connecting member 4000 by means of the second protruding portion 3252.

Based on the same inventive concept, in combination with the description of the lid assembly 1000 of the above embodiments, this embodiment provides an assembly method of the lid assembly 1000, and the assembly method of the lid assembly 1000 has corresponding technical effects of the lid assembly 1000 of the above embodiments, which will not be described in detail here.

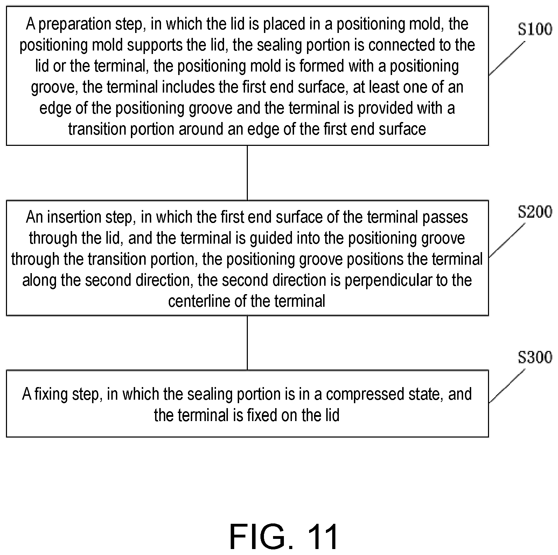

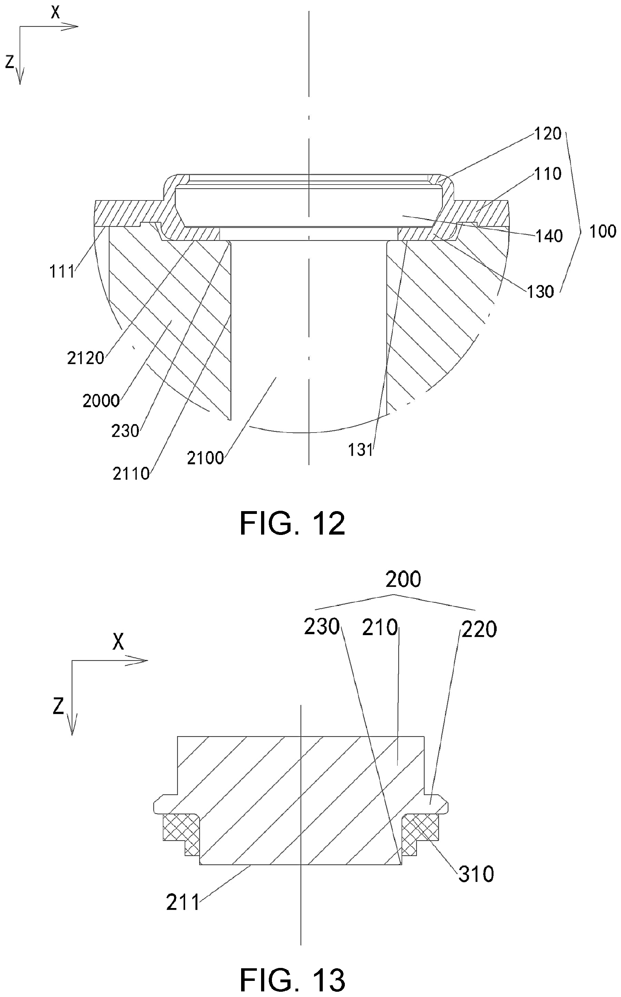

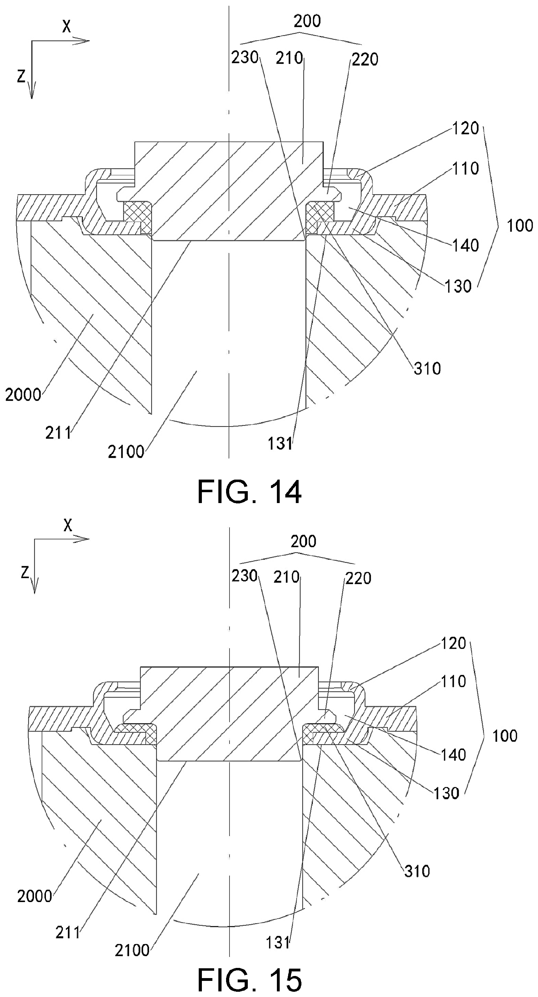

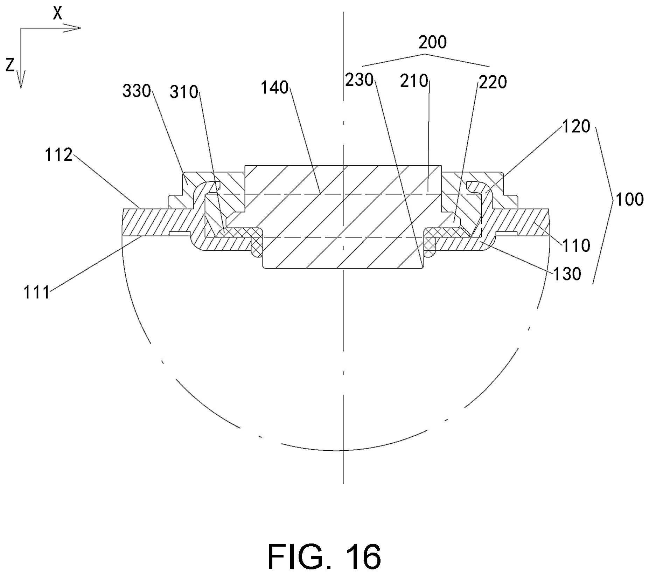

FIG. 11 shows a flow diagram of an assembly method of the lid assembly 1000 of the second structure, FIG. 12 shows a partial sectional diagram of the lid 100 installed on a positioning mold 2000, FIG. 13 shows a partial sectional diagram of connecting the sealing portion 310 to the terminal 200, FIG. 14 shows a partial sectional diagram of the terminal 200 disposed through the accommodation space 140 with the sealing portion 310 in a natural state, FIG. 15 shows a partial sectional diagram of the sealing portion 310 in a compressed state, and FIG. 16 shows a partial sectional diagram of the sealing portion 310 in a compressed state and fixing the terminal 200 to the lid 100.

As shown in FIG. 11, the assembly method of the lid assembly 1000 provided by this embodiment includes:
As shown in FIG. 12 and FIG. 13, step S100 (Preparation) includes: placing the lid 100 on the positioning mold 2000, the positioning mold 2000 supporting the lid 100; connecting the sealing portion 310 to the lid 100 or to the terminal 200; wherein the positioning mold 2000 defines a positioning groove 2100 and the terminal 200 includes the first end surface 211; and wherein at least one of an edge of the positioning groove 2100 and the terminal 200 is provided with the transition portion 230 surrounding the edge of the first end surface 211.

Exemplarily, the positioning groove 2100 may be a blind hole with an open upper end and a closed lower end, or a through hole with both upper and lower ends open.

Exemplarily, the positioning mold 2000 supports the second surface 111 and/or the third surface 131.

Exemplarily, the number of positioning grooves 2100 provided on the same positioning mold 2000 may be the same as the number of accommodation spaces 140 on each lid 100, or only one positioning groove 2100 is provided on the same positioning mold 2000.

As shown in FIG. 12 and FIG. 13, the sealing portion 310 may be assembled on the terminal base 210 of the terminal 200, and brought into contact with the surface of the protruding portion 220 close to the first end surface 211. The sealing portion 310 may also be connected to the surface of the protruding portion 220 close to the first end surface 211 through adhesive bonding or hot pressing. In addition, the sealing portion 310 may also be installed in the accommodation space 140, and brought close to or connected to the surface of the second fixing portion 130 opposite to the third surface 131.

It should be noted that, as shown in FIG. 12, the positioning groove 2100 has a cylindrical inner wall 2110 of the positioning groove. When the terminal 200 is inserted into the positioning groove 2100, the inner wall 2110 of the positioning groove is provided to contact the circumferential sidewall of the terminal 200. The positioning groove 2100 also has an upper wall 2120 of positioning groove that is annular around its opening. The upper wall 2120 of the positioning groove may contact the lid 100 to support the lid 100. When the transition portion 230 is provided on the positioning mold 2000, the transition portion 230 may be provided between the inner wall 2110 of the positioning groove and the upper wall 2120 of the positioning groove.

As shown in FIG. 13, when the transition portion 230 is provided on the terminal 200, the transition portion 230 may be provided between the circumferential sidewall of the terminal 200 and the first end surface 211.

As shown in FIG. 12, the positioning mold 2000 may be fixed first. The positioning mold 2000 is formed with the positioning groove 2100 extending along the first direction. The upper-end opening of the positioning groove 2100 is provided at the top of the positioning mold 2000. Along the second direction, the dimension of the upper-end opening of the positioning groove 2100 matches the dimension of the portion of the terminal 200 close to the first end surface 211.

The cleaned lid 100 is placed on the positioning mold 2000, and the relative position between the lid 100 and the positioning mold 2000 is adjusted so that the centerline of the accommodation space 140 is substantially aligned with the centerline of its corresponding positioning groove 2100.

As shown in FIG. 14, in step S200 (Insertion), the first end surface 211 of the terminal 200 passes through the lid 100, and the terminal 200 is guided into the positioning groove 2100 through the transition portion 230. The positioning groove 2100 positions the terminal 200 along the second direction. The second direction is perpendicular to the centerline of the terminal 200.

It should be noted that, in the insertion step, the sealing portion 310 is in a natural state.

The terminal 200 is inserted downward from above into the accommodation space 140. After the first end surface 211 extends beyond the inner bore defined by the second fixing portion 130, the position of the terminal 200 is adjusted until the first end surface 211 is aligned with the upper opening of the positioning groove 2100 and is inserted into the positioning groove 2100. Under the position-limiting action of the groove wall of the positioning groove 2100 upon the circumferential sidewall of the terminal 200, the position of the terminal 200 in the second direction is fixed. In this condition, the centerline of the terminal 200 is substantially aligned with the centerline of the accommodation space 140. Upon subsequent compression of the sealing portion 310, the protruding portion 220 of the terminal 200 cooperates with the second fixing portion 130 to apply a relatively uniform force to the sealing portion 310, thereby enabling the sealing portion 310 to achieve improved sealing performance.

It should be noted that, during the process of aligning the terminal 200 with the upper-end opening of the positioning groove 2100, the transition portion 230, whether disposed on the terminal 200 or on the positioning mold 2000, may serve to guide the terminal 200. By means of the transition portion 230, the first end surface 211 of the terminal 200 may be driven to move to a position aligned with the upper-end opening of the positioning groove 2100, thereby enabling the terminal 200 to be smoothly inserted into the positioning groove 2100.

FIG. 15 and FIG. 16 show that, in step S300 (Fixing), the sealing portion 310 is made to be in a compressed state and the terminal 200 is fixed with the lid 100.

By way of example and with reference to the structure and orientation shown in FIG. 15 and FIG. 16, a downward pressing operation is performed on an end of the terminal 200 that is away from the first end surface 211. During this process, because the lid 100 is supported by the positioning mold 2000, the position of the second fixing portion 130 along the first direction remains unchanged; meanwhile, the protruding portion 220 of the terminal 200 moves downward and transmits the pressing force to the sealing portion 310. Under the combined pressing of the protruding portion 220 and the second fixing portion 130, the sealing portion 310 undergoes deformation, thereby transitioning to a compressed state and producing a sealing effect. In this condition, the terminal 200 is secured to the lid 100, thereby fixing the relative positions of the protruding portion 220 of the terminal 200 and the second fixing portion 130, and enabling both to continuously compress the sealing portion 310 so as to maintain the sealing effect.

As shown in FIG. 4 and FIG. 5, in some embodiments, the lid assembly 1000 assembly method further includes:
Step S400 (Connection), connecting the lower insulating portion 320 to a side of the lid 100 close to the first end surface 211, so that the first end surface 211 passes through the lower insulating portion 320 and protrudes beyond the lower insulating portion 320 along the first direction.

The lower insulating portion 320 is provided with the through holes 321 corresponding to the terminals 200 one by one. The lower insulating portion 320 is assembled on the terminal 200 through the through hole 321, and the first end surface 211 passes through the lower insulating portion 320, so that the first end surface 211 is located on a side of the lower insulating portion 320 away from the lid 100.

The lower insulating portion 320 may be connected with the lid 100 through snap-fitting, adhesive bonding, or hot pressing.

As shown in FIG. 16, in some embodiments, the fixing step includes:
Injection molding for forming the upper insulating portion 330, and the terminal 200 is fixedly connected with the lid 100 through the upper insulating portion 330.

In forming the upper insulating portion 330, an injection mold may be disposed to cover the terminal 200 and the first fixing portion 120, and the injection mold may press the terminal 200 downward so that the sealing portion 310 is subjected to pressure and transitions to a compressed state. Thereafter, a flowing injection-molding material is injected into an inner cavity of the injection mold, and the injection-molding material may enter the accommodation space 140; upon curing of the injection-molding material, the upper insulating portion 330 connecting the terminal 200 and the lid 100 is thereby formed.

## Claims

1. A lid assembly (1000), comprising:
a lid (100), a terminal (200), and an insulating and sealing structure (300), wherein the lid (100) and the terminal (200) are connected through the insulating and sealing structure (300);
wherein
the lid (100) comprises a lid base (110) and a second fixing portion (130) disposed surrounding the terminal (200), the lid base (110) comprises a first surface (112) and a second surface (111) disposed opposite to each other along a first direction, the second fixing portion (130) extends from the second surface (111) at least along a second direction toward a centerline of the terminal (200),
along the first direction, the terminal (200) is at least partially disposed on a side of the second fixing portion (130) close to the first surface (112), and the insulating and sealing structure (300) comprises a sealing portion (310) disposed between the second fixing portion (130) and the terminal (200),
the second fixing portion (130) and the terminal (200) clamp the sealing portion (310) along the first direction, so that the sealing portion (310) is in a compressed state,
the first direction is a centerline direction of the terminal (200), and the second direction is perpendicular to the first direction;
wherein
along the first direction, the second fixing portion (130) comprises a third surface (131) away from the first surface (112), the terminal (200) comprises a first end surface (211) close to the second fixing portion (130), the first end surface (211) protrudes beyond the third surface (131) in a direction away from the first surface (112), a transition portion (230) is disposed between the first end surface (211) and a circumferential sidewall of the terminal (200),
along the first direction, a linear distance between the first end surface (211) and the third surface (131) is H₁, a dimension of the transition portion (230) is H₂, a compression deformation amount of the sealing portion (310) is B-b, a dimension of the sealing portion (310) in a natural state is B, and a dimension of the sealing portion (310) in a compressed state is b, where ${H}_{1} > B - b + {H}_{2} .$

2. The lid assembly (1000) according to claim 1, wherein
a projection of a portion of the terminal (200) protruding beyond the third surface (131) along the first direction is circular.

3. The lid assembly (1000) according to claim 1, wherein
the insulating and sealing structure (300) comprises a lower insulating portion (320),
along the first direction, the lower insulating portion (320) is at least disposed on a side of the second fixing portion (130) away from the first surface (112),
the sealing portion (310) is connected to the lower insulating portion (320).

4. The lid assembly (1000) according to claim 3, wherein
the lower insulating portion (320) is provided with a through hole (321), and
a gap is provided between an edge of the through hole (321) and the terminal (200).

5. The lid assembly (1000) according to claim 4, wherein
the lower insulating portion (320) comprises a fourth surface (322) close to the second fixing portion (130) along the first direction, the fourth surface (322) comprises a first annular plane (3221) disposed along the edge of the through hole (321);
along the first direction, a projection of the first annular plane (3221) covers the third surface (131).

6. The lid assembly (1000) according to claim 5, wherein
the lower insulating portion (320) comprises a second annular plane (324) disposed opposite to the first annular plane (3221) along the first direction,
along the first direction, the first end surface (211) protrudes beyond the second annular plane (324) in the direction away from the first surface (112), and a linear distance between the first end surface (211) and the second annular plane (324) is H₅, where $0.3 mm \leq {H}_{5} \leq 0.8 mm .$

7. The lid assembly (1000) according to claim 1, wherein
along the first direction, a ratio of a compression deformation amount of the sealing portion (310) to a dimension of the sealing portion (310) in a natural state is $\frac{B - b}{B}$, where $10 % \leq \frac{B - b}{B} \leq 60 % .$

8. The lid assembly (1000) according to claim 1, wherein
the transition portion (230) comprises a rounded chamfer, H₂ is a radius of the rounded chamfer, where $0.1 mm \leq {H}_{2} \leq 0.3 mm .$

9. The lid assembly (1000) according to claim 1, wherein
the second fixing portion (130) further extends from the second surface (111) along the first direction toward a direction away from the lid base (110), so that the second fixing portion (130) protrudes beyond the lid base (110) along the first direction.

10. The lid assembly (1000) according to claim 1, wherein
the lid (100) further comprises a first fixing portion (120) disposed around the terminal (200),
the first fixing portion (120) extends from the first surface (112) at least along the first direction toward a direction away from the lid base (110);
the insulating and sealing structure (300) comprises an upper insulating portion (330),
the upper insulating portion (330) is connected between the terminal (200) and the first fixing portion (120).

11. A cell, comprising:
an electrode assembly (3000); and
the lid assembly (1000) according to any one of claims 1 to 10,
wherein the lid assembly (1000) is electrically connected to the electrode assembly (3000) through a connecting member (4000),
wherein
the insulating and sealing structure (300) comprises a lower insulating portion (320), and
the lower insulating portion (320) comprises a second annular plane (324);
along the first direction, a minimum linear distance from the connecting member (4000) to the second annular plane (324) opposite thereto is H₃, where ${H}_{3} \geq 0.3 mm .$

12. The cell according to claim 11, wherein
the connecting member (4000) is connected to the first end surface (211) through welding,
along the first direction, a minimum linear distance from a region of the second annular plane (324) close to the terminal (200) to the connecting member (4000) is H₄, where $0.5 mm \leq {H}_{4} \leq 1.0 mm ;$
wherein
the insulating and sealing structure (300) comprises a lower insulating portion (320), and
the lower insulating portion (320) is provided with a through hole (321);
the connecting member (4000) is welded to the first end surface (211) and forms a weld mark (4100) on a surface of the connecting member (4000) close to the electrode assembly (3000), a minimum distance from an edge of the weld mark (4100) to an edge of the through hole (321) is L₁, where ${L}_{1} \geq 2.5 mm .$

13. The cell according to claim 11, wherein
the insulating and sealing structure (300) comprises a lower insulating portion (320),
the lower insulating portion (320) comprises a fifth surface (323) away from the second fixing portion (130) along the first direction,
the fifth surface (323) is provided with a positioning structure (325) protruding toward the electrode assembly (3000) along the first direction, and the positioning structure (325) is provided for positioning the connecting member (4000);
the positioning structure (325) comprises a first protruding portion (3251), along the first direction, a projection of the connecting member (4000) covers the first protruding portion (3251), and an edge of the first protruding portion (3251) at least partially overlaps with an edge of the projection of the connecting member (4000); or,
the positioning structure (325) comprises a second protruding portion (3252), the second fixing portion (130) is disposed on an outer periphery of the connecting member (4000) along an edge of the connecting member (4000), and the second fixing portion (130) protrudes, toward the electrode assembly (3000) along the first direction, beyond a welding surface of the connecting member (4000) that is welded to the first end surface (211).

14. An assembly method of a lid assembly (1000), comprising:
a preparation step of placing a lid (100) in a positioning mold (2000), the positioning mold (2000) supporting the lid (100), connecting a sealing portion (310) to the lid (100) or a terminal (200), the positioning mold (2000) being formed with a positioning groove (2100), the terminal (200) comprising a first end surface (211), at least one of an edge of the positioning groove (2100) and the terminal (200) is provided with a transition portion (230) around an edge of the first end surface (211);
an insertion step of making the first end surface (211) of the terminal (200) to pass through the lid (100), and the terminal (200) being guided into the positioning groove (2100) through the transition portion (230), the positioning groove (2100) positioning the terminal (200) along a second direction, the second direction being perpendicular to a centerline of the terminal (200); and
a fixing step of making the sealing portion (310) to be in a compressed state, and the terminal (200) being fixed on the lid (100).

15. The assembly method of the lid assembly (1000) according to claim 14, further comprising:
a connection step of connecting a lower insulating portion (320) to a side of the lid (100) close to the first end surface (211), making the first end surface (211) to pass through the lower insulating portion (320) and protrude beyond the lower insulating portion (320) along the first direction,
wherein the first direction is a centerline direction of the terminal (200);
wherein the fixing step comprises:
injection molding for forming an upper insulating portion (330),
wherein the terminal (200) is fixedly connected with the lid (100) through the upper insulating portion (330).
